# EUROPÄISCHE PATENTSCHRIFT

(11) **EP 2 021 736 B1**
(45) Veröffentlichungstag und Bekanntmachung des Hinweises auf die Patenterteilung: **02.04.2014**
(21) Anmeldenummer: 07729479.1
(22) Anmeldetag: 24.05.2007
(51) Int. Cl.: G01D 3/028, G08C 19/02, H04Q 9/00

(54) **MESSUMFORMER**
MEASURING TRANSDUCER
TRANSDUCTEUR DE MESURE

(30) Priorität: 26.05.2006 DE 102006024742
(43) Veröffentlichungstag der Anmeldung: 11.02.2009
(73) Patentinhaber: Siemens Aktiengesellschaft, 80333 München (DE)
(72) Erfinder: MATZEN, Steen Moellebjerg, 6470 Sydals (DK)
(86) Internationale Anmeldenummer: PCT/EP2007/055049
(87) Internationale Veröffentlichungsnummer: WO 2007/137988

(56) Entgegenhaltungen:
- EP-A- 0 800 059
- EP-A- 1 260 795
- DE-A1- 19 533 712

## Beschreibung

Die Erfindung betrifft einen Messumformer nach dem Oberbegriff des Anspruchs 1

In der Automatisierungstechnik werden häufig Feldgeräte zur Prozessinstrumentierung eingesetzt, die beispielsweise zur Erfassung und/oder Beeinflussung von Prozessvariablen dienen und durch ein Automatisierungsnetzwerk, insbesondere mit einem Feldbus, zum Austausch von Daten miteinander verbunden sind. Feldgeräte, die eine physikalische oder chemische Größe als Prozessvariable erfassen, werden häufig als Messumformer bezeichnet, da sie die jeweilige Größe in einen Messwert um-formen und diesen beispielsweise an eine übergeordnete Leit-station oder als Istwert an einen Regler zur weiteren Verarbeitung ausgeben. Beispiele für derartige Messumformer sind Messumformer für Füllstand, Massendurchfluss, Druck, Temperatur, pH-Wert, Leitfähigkeit usw..

Häufig werden Messumformer modular aufgebaut. Beispielsweise bei einem Messumformer für magnetisch-induktive Durchflussmessung dient ein Aufnehmer zur Erfassung der Fließgeschwindigkeit als physikalische Größe eines durch ein Messrohr strömenden Mediums und zur Erzeugung eines Messsignals, das der Fließgeschwindigkeit entspricht. Eine Auswerteeinrichtung dient zur weiteren Auswertung des Messsignals und zur Durchführung der Kommunikationsaufgaben, die neben der Messwertübertragung auch Überwachungs- und Diagnosefunktionen enthalten. Die Auswerteeinrichtung berechnet in Abhängigkeit des Messsignals einen Messwert für die Fließgeschwindigkeit und gibt diesen über die Kommunikationsschnittstelle, beispielsweise an eine übergeordnete Leitstation oder einen Regler zur Durchflussregelung, zur weiteren Verarbeitung aus. Aufnehmer und Auswerteeinheit werden häufig auch als Sensor bzw. Transmitter bezeichnet.

Insbesondere bei einer Verwendung des Messumformers in einer Abtastregelung, in welcher Messwerte zyklisch zu bestimmten Zeitpunkten erfasst und durch einen Regler unter Berücksichtigung der Abtastintervalle neue Stellgrößen für das nächste Abtastintervall berechnet werden, ist es wichtig, dass an den Regler übergebene Istwerte der aktuellen physikalischen oder chemischen Größe entsprechen. Zeitliche Abweichungen bei der Erfassung der Größe und der Bestimmung des Messwerts beeinträchtigen die erreichbare Regelgenauigkeit.

Aus der DE 195 33 712 A1 ist eine Sensorvorrichtung zum Umsetzen von analogen Sensorsignalen in digitale Daten und zum effektiven Übertragen der digitalen Daten zu einem Mikrocomputer als Auswerteeinrichtung bekannt. Der Digital/AnalogWandler zeigt dem Mikrocomputer mit Hilfe eines Datenübertragungssignals an, ob das Ergebnis der Wandlung zur Übertragung bereit steht.

In der EP 1 260 795 A2 wird eine Schaltungsanordnung zur Auswertung von Impulsfolgen eines Sensors beschrieben. Dabei wird eine Impulsfolge beispielsweise eines Drehzahlgebers gezählt und mit Hilfe eines Interruptgebers bei jedem Zählimpuls einem Mikroprozessor gemeldet, dass ein neues Wertepaar, bestehend aus der Impulszahl und einem Zeitstempel, in Registern zum Auslesen bereit steht.

Die EP 0 800 059 A1 offenbart ein Verfahren zur Übertragung von Informationen in einer Positionsmesseinrichtung, bei welchem auf Messdaten bezogene Informationen über die Versorgungsleitung von einer Abtasteinheit an eine Auswerteeinheit übertragen werden.

Der Erfindung liegt die Aufgabe zugrunde, einen Messumformer mit modularem Aufbau zu schaffen, der bei verringertem Herstellungsaufwand eine genauere Zuordnung eines ausgegebenen Messwerts zu dem Zeitpunkt der Erfassung der physikalischen oder chemischen Größe ermöglicht.

Zur Lösung dieser Aufgabe weist der neue Messumformer der eingangs genannten Art die im kennzeichnenden Teil des Anspruchs 1 angegebenen Merkmale auf. In den abhängigen Ansprüchen sind vorteilhafte Weiterbildungen der Erfindung beschrieben.

Die Erfindung hat den Vorteil, dass sie eine zeitlich genaue, digitale Übertragung eines Messsignals, das als zeitdiskrete Abtastung einer physikalische oder chemischen Größe im Aufnehmer gebildet wurde, zu einer Auswerteeinrichtung zur digitalen Weiterverarbeitung des zeitdiskret erfassten digitalen Messsignals ermöglicht. Da die analogen Komponenten der Messsignalerfassung und einer Signalvorverarbeitung zur Erzeugung eines digitalen Messsignals im Aufnehmer zusammengefasst werden können, ist keine Übertragung analoger Signale über längere Verbindungsleitungen mehr nötig. Damit wird die Empfindlichkeit des Messumformers gegenüber Störungen von außen, die analoge Signale verfälschen könnten, verringert und es wird eine verbesserte Messgenauigkeit erreicht. Ein weiterer Vorteil ist darin zu sehen, dass die Erfindung es ermöglicht, die Auswertung der Auswerteeinrichtung auf die Abtastzeitpunkte, zu welchen der Aufnehmer die physikalische oder chemische Größe erfasst und ein entsprechendes digitales Messsignal erzeugt, zu synchronisieren. Dadurch kann ein so genannter Jitter der durch den Messumformer ausgegebenen Messwerte erheblich verringert werden. Als Jitter werden zeitlich schwankende Abweichungen zwischen geplanten und tatsächlichen Zeitpunkten wiederkehrender Ereignisse bezeichnet. Die Wirkung eines derartigen Jitters entspricht einem überlagerten Rauschen der Messwerte und führt daher zu einer Verringerung der Messgenauigkeit.

Andererseits ist es durch die Erfindung möglich, bei einem Feldbus oder einem Automatisierungsnetzwerk mit zyklischer Übertragung der Messwerte die Messsignalerzeugung des Aufnehmers an die Zeitpunkte der Messwertausgabe des Messumformers anzupassen, das heißt den Aufnehmer auf die Auswerteeinrichtung zu synchronisieren. Das kann in einfacher Weise dadurch erfolgen, dass die Auswerteeinrichtung eine Abtastung der physikalischen oder chemischen Größe durch den Aufnehmer so frühzeitig startet, dass gerade zu den Zeitpunkten der zyklischen Messwertübertragung die Auswertung des Messsignals durch die Auswerteeinrichtung abgeschlossen ist, so dass zu jedem Zeitpunkt einer Messwertübertragung ein möglichst aktueller Messwert vorhanden ist.

Bei magnetisch induktiven Durchflussmessern stellen Aufnehmer etwa zwei bis fünf aktualisierte Messsignale je Sekunde zur Verfügung. Wird über den Feldbus ein Messwert des Messumformers abgefragt, so wird häufig gefordert, dass dieser innerhalb weniger Millisekunden zur Verfügung gestellt wird. Es kann daher vorkommen, dass der Zeitpunkt der Erfassung der physikalischen oder chemischen Größe, von welcher der Messwert abgeleitet wurde, bereits 200 bis 500 ms zurückliegt. Damit dies in der nachfolgenden Auswertung des Messwerts berücksichtigt werden kann, ist es möglich, den Messwert bei der Datenübertragung über den Feldbus mit einem Zeitstempel zu versehen. Die zusätzliche Zeitinformation kann beispielsweise bei Verwendung des Messwerts in einem Regler in den Regelalgorithmus einbezogen werden, um die Regelgenauigkeit zu verbessern.

Der Aufnehmer zeigt der Auswerteeinrichtung mit einem Signal an, wann ein aktuelles Messsignal zur Übertragung an die Auswerteeinrichtung bereitsteht. Das hat den Vorteil, dass die Schnittstelle zur digitalen Übertragung des Messsignals als einfache Master-Slave-Schnittstelle ausgeführt werden kann, bei welcher die Auswerteeinrichtung als Master das von dem Aufnehmer als Slave zur Verfügung gestellte digitale Messsignal abholt. Eine derartige digitale Schnittstelle ist mit besonders geringem Aufwand realisierbar.

Häufig werden zur Rauschunterdrückung bereits in die Auswerteeinrichtung von Messumformern digitale Filterfunktionen integriert. Durch Berücksichtigung des jeweiligen Abtastzeitpunkts der physikalischen oder chemischen Größe durch den Aufnehmer bereits bei dieser Messwertfilterung in der Auswerteeinrichtung kann die Messgenauigkeit weiter verbessert werden.

Als weitere Schnittstelle wird in vorteilhafter Weise eine Übertragungseinrichtung verwendet, welche zur Übertragung der zum Betrieb des Aufnehmers erforderlichen Energie von der Auswerteeinrichtung an den Aufnehmer vorgesehen ist. Da Aufnehmer von Messumformern meist durch die Auswerteeinrichtung mit Betriebsenergie versorgt werden, ist vorteilhaft keine zusätzliche Verbindung zwischen Auswerteeinrichtung und Aufnehmer zur Realisierung der weiteren Schnittstelle notwendig und der Herstellungsaufwand des Messumformers wird verringert. Zudem wirkt sich dies günstig auf die Verfügbarkeit des Messumformers aus, da keine zusätzlichen, störungsanfälligen Steckkontakte benötigt werden.

Weiterhin kann die Auswerteeinrichtung vorteilhaft dazu ausgebildet werden, die Wiederholrate der Anzeigesignale des Aufnehmers auf Einhalten vorgebbarer Grenzwerte zu überwachen. Bei ordnungsgemäßer Funktion gibt der Aufnehmer zyklisch wie ein Herzschlag Anzeigesignale an die Auswerteeinrichtung aus. In den Aufnehmer können Funktionen zur Selbst-diagnose integriert werden. Wenn der Aufnehmer mit diesen einen Fehler feststellt, teilt er den Fehler der Auswerteeinrichtung beispielsweise durch Unterbrechen des Herzschlags mit. Ein Ausbleiben eines Anzeigesignals wird durch die Auswerteeinrichtung sofort als Fehlerzustand erkannt. Dadurch ist eine höhere Sicherheitsklasse des Messumformers erreichbar. Betreiber von automatisierungstechnischen Anlagen sind daran interessiert, die jeweilige Anlage möglichst betriebssicher zu gestalten. Diese Sicherheit ist durch mögliche Fehlfunktionen der Anlagenkomponenten während der Betriebsphase begrenzt. Jede Komponente kann entweder während des laufenden Betriebs fehlerhaft weiterarbeiten oder aber komplett ausfallen. Je nach Einbettung der schadhaften Komponente in die Anlage bewirkt der Ausfall einer einzelnen Anlagenkomponente gegebenenfalls den Ausfall der Gesamtanlage. Um die Sicherheit von Anlagenkomponenten zu quantifizieren, wurden Safety-Integrity-Levels (SIL) gemäß der Industrienorm IEC 61508 festgelegt. Hierbei gibt eine Zahl an, welches Sicherheitsniveau die jeweilige Anlagenkomponente bietet. Zum Beispiel steht "SIL1" für das SIL-Niveau 1 und repräsentiert den niedrigsten Schutzgrad innerhalb des Klassenschemas der Safety-Integrity-Levels. Entsprechend bedeutet "SIL2" einen höheren Schutzgrad. Jeder Sicherheitsklasse lässt sich eine Wahrscheinlichkeit zuordnen, dass das Betreiben des Systems innerhalb von 1000 Jahren, 10000 Jahren oder 100000 Jahren etc. zu einem Verlust an Menschenleben führt. Eine höhere Sicherheitsklasse ist daher beim Einsatz der Komponenten von großer Bedeutung.

Die Sicherheitsklasse kann in vorteilhafter Weise weiter erhöht werden, wenn Betriebszustände des Aufnehmers, insbesondere bei Auftreten eines Fehlers, über die Schnittstelle zur digitalen Übertragung des Messsignals zusätzlich zu den Messsignalen selbst übertragbar sind. Wenn dieselben Sicherheitsdaten über zwei unabhängige Schnittstellen von einer Datenquelle zu einer Datensenke übertragen werden, wird das Risiko fehlerhafter Sicherheitsdaten verringert und entsprechend die Verfügbarkeit des Gesamtsystems erhöht. Zudem ermöglicht die zusätzliche Übertragung von Betriebszuständen Diagnosefunktionen des Messumformers. Wenn ein unsicherer Betriebszustand des Aufnehmers erkannt wird, erfolgt sowohl eine Anzeige des fehlerhaften Betriebszustands über die digitale Schnittstelle als auch über die weitere Schnittstelle, da über die weitere Schnittstelle keine Anzeigesignale mehr ausgegeben werden, dass aktuelle Messsignale bereitstehen.

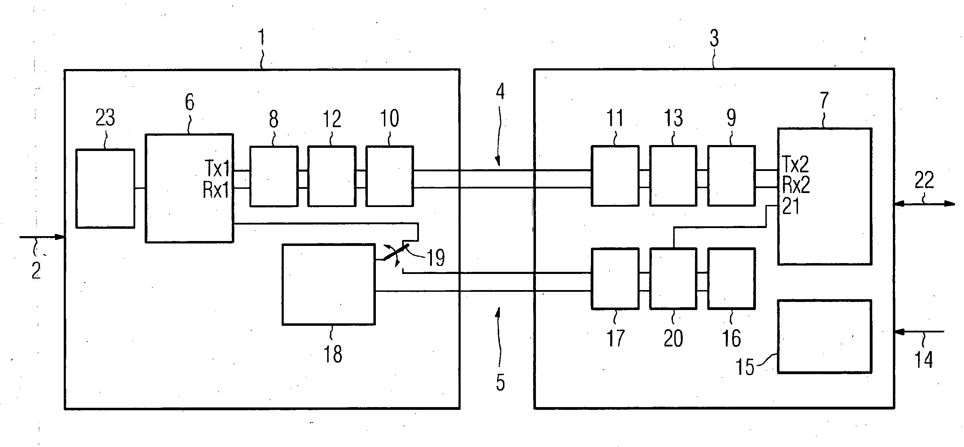

Anhand der Zeichnung, in der ein Ausführungsbeispiel der Erfindung dargestellt ist, werden im Folgenden die Erfindung sowie Ausgestaltungen und Vorteile näher erläutert.

In der einzigen Figur ist ein Messumformer mit modularem Aufbau dargestellt. Er weist einen Aufnehmer 1 zur Erfassung einer physikalischen oder chemischen Größe 2 und eine Auswerteeinrichtung 3 zur Ermittelung eines Messwerts in Abhängigkeit eines Messsignals auf. Zur Erfassung der physikalischen oder chemischen Größe und zur Umsetzung in ein weiterverarbeitbares elektrisches Signal dient eine Messschaltung 23 im Aufnehmer 1. Dieses Signal wird in einem Mikrocontroller 6 einer Signalvorverarbeitung unterzogen. Ein durch den Aufnehmer 1 entsprechend der physikalischen oder chemischen Größe 2 erzeugtes digitales Messsignal wird über eine Schnittstelle 4 an die Auswerteeinrichtung 3 übertragen. Eine weitere Schnittstelle 5 ist dazu vorgesehen, der Auswerteeinrichtung 3 mit einem Signal anzuzeigen, dass ein aktuelles Messsignal des Aufnehmers 1 zur Übertragung bereitsteht. Dieses Messsignal wird anschließend durch die Auswerteeinrichtung 3 über die Schnittstelle 4, die nach dem Master-Slave-Prinzip arbeitet, vom Aufnehmer 1 abgeholt. Dadurch ist der Auswerteeinrichtung 3 der jeweilige Zeitpunkt bekannt, zu welchem durch den Aufnehmer 1 das digitale Messsignal erzeugt wurde. Über die digitale Schnittstelle 4 werden zusätzlich Kennungen für Betriebszustände, beispielsweise "Messrohr leer" oder "Magnetkreis gestört" bei einem magnetisch-induktiven Durchflussmessumformer, für Diagnosefunktionen an die Auswerteeinrichtung 3 übertragen. Zur digitalen Kommunikation sind in dem Mikrocontroller 6 und einem Mikrocontroller 7 des Aufnehmers 1 bzw. der Auswerteeinrichtung 3 jeweils so genannte UART (Universell Asynchronous Receiver Transmitter)-Bausteine integriert, die Ausgänge Tx1 bzw. Tx2 sowie Eingänge Rx1 bzw. Rx2 aufweisen. Die Schnittstellen 4 und 5 genügen den Anforderungen des Explosionsschutzes nach Ex(ia). Zur Gewährleistung des Explosionsschutzes dienen jeweils Spannungsbegrenzer 8 bzw. 9 und Strombegrenzer 10 bzw. 11 in den Datenpfaden der Schnittstelle 4. Als Leitungstreiber sind so genannte RS-485-Transceiver 12 bzw. 13 vorgesehen. Die Stromversorgung des Messumformers erfolgt über einen 230 V-Anschluss 14. Die Netzspannung wird durch einen so genannten AC/DC-Wandler 15 in eine intern verwendete 18 V-Gleichspannung umgesetzt. Daraus wird in der Auswerteeinrichtung 3 auch die zum Betrieb des Aufnehmers 1 erforderliche Energie abgezweigt. Zur Gewährleistung des Explosionsschutzes sind der weiteren Schnittstelle 5, die zusätzlich zur Übertragung des Anzeigesignals auch zur Übertragung der zum Betrieb des Aufnehmers 1 erforderlichen Energie dient, ein Spannungsbegrenzer 16 und ein Strombegrenzer 17 vorgesehen. Auf der Seite des Aufnehmers 1 dient eine Schaltung 18 zur Erzeugung der internen Betriebsspannung aus der zugeführten Energie. Zur Anzeige, dass ein aktuelles Messsignal des Aufnehmers 1 zur Übertragung bereit steht, wird ein Schalter 19 verwendet, der kurzzeitig zur Modulation des vom Aufnehmer 1 gezogenen Stroms geöffnet wird. Mit einer Schaltung 20 wird das Anzeigesignal auf der Seite der Auswerteeinrichtung 3 erfasst und auf einen Eingang 21 des Mikrocontrollers 7 zur weiteren Verarbeitung geführt. In der Auswerteeinrichtung 3 wird durch geeignete Weiterverarbeitung des digitalen Messsignals ein Messwert gewonnen, der in einem Automatisierungsnetzwerk, beispielsweise über einen Feldbus 22, an weitere Automatisierungskomponenten übertragen wird. Weitere Komponenten des Messumformers, die in bekannter Weise ausgeführt sein können, sind in der Figur der Übersichtlichkeit wegen nicht dargestellt.

## Patentansprüche

1. Messumformer mit einem Aufnehmer (1) zur Erfassung einer physikalischen oder chemischen Größe (2) und zur Erzeugung eines entsprechenden Messsignals, mit einer Auswerteeinrichtung (3) zur Ermittelung eines Messwerts in Abhängigkeit des Messsignals und zur Ausgabe des Messwerts, wobei zwischen dem Aufnehmer (1) und der Auswerteeinrichtung (3) eine Schnittstelle (4) zur digitalen Übertragung des Messsignals und eine weitere Schnittstelle (5) vorgesehen sind und wobei durch die weitere Schnittstelle (5) der Auswerteeinrichtung (3) mit einem Signal anzeigbar ist, dass ein aktuelles Messsignal des Aufnehmers (1) zur Übertragung bereit steht, **dadurch gekennzeichnet, dass** eine Einrichtung (15...18) vorgesehen ist zur Übertragung der zum Betrieb des Aufnehmers (1) erforderlichen Energie von der Auswerteeinrichtung (3) an den Aufnehmer (1), dass die Übertragungseinrichtung (15...18) für die Betriebsenergie des Aufnehmers (1) als die weitere Schnittstelle (5) ausgebildet ist, wobei der Aufnehmer (1) mit Mitteln (19) versehen ist, um den Versorgungsstrom zur Anzeige, dass ein aktuelles Messsignal des Aufnehmers (1) zur Übertragung bereit steht, zu verändern, und wobei die Auswerteeinrichtung (3) mit Mitteln (20) versehen ist, um diese Veränderung des Versorgungsstroms zu erfassen und als Anzeigesignal auszuwerten.

2. Messumformer nach Anspruch 1, **dadurch gekennzeichnet, dass** die Auswerteeinrichtung (3) dazu ausgebildet ist, die Wiederholrate der Anzeigesignale des Aufnehmers (1), dass ein aktuelles Messsignal des Aufnehmers (1) zur Übertragung bereit steht, auf Einhalten vorgebbarer Grenzwerte zu überwachen.

3. Messumformer nach einem der Ansprüche 1 oder 2, **dadurch gekennzeichnet, dass** Betriebszustände des Aufnehmers (1) ebenfalls über die Schnittstelle (4) zur digitalen Übertragung des Messwerts übertragbar sind.

## Claims

1. Measuring transducer comprising a sensor (1) for capturing a physical or chemical quantity (2) and for generating a corresponding measurement signal, and comprising an analysis entity (3) for determining a measured value depending on the measurement signal and for outputting the measured value, wherein between the sensor (1) and the analysis entity (3) provision is made for an interface (4) for digital transmission of the measurement signal and for a further interface (5), wherein by virtue of the further interface (5) it is possible to indicate using a signal to the analysis entity (3) that a current measurement signal of the sensor (1) is available for transmission, **characterised in that** an entity (15...18) is provided for transmitting the energy that is required for operation of the sensor (1) from the analysis entity (3) to the sensor (1), **in that** the transmission entity (15...18) for the operating energy of the sensor (1) is configured as the further interface (5), the sensor (1) being provided with means (19) for changing the supply current in order to indicate that a current measurement signal of the sensor (1) is available for transmission, and the analysis entity (3) being provided with means (20) for capturing this change in the supply current and analysing it as an indicator signal.

2. Measuring transducer according to claim 1, **characterised in that** the analysis entity (3) is designed to monitor the refresh rate of the indicator signals of the sensor (1) for compliance with presettable limit values, said signals signifying that a current measurement signal of the sensor (1) is available for transmission.

3. Measuring transducer according to one of claims 1 or 2 **characterised in that** operating states of the sensor (1) can likewise be transmitted via the interface (4) for digital transmission of the measured value.

## Revendications

1. Transducteur de mesure comprenant un capteur ( 1 ), pour la détection d'une grandeur ( 2 ) physique ou chimique et pour la production d'un signal de mesure correspondant, un dispositif ( 3 ) d'exploitation, pour la détermination d'une valeur de mesure en fonction du signal de mesure et pour l'émission de la valeur de mesure, dans lequel il est prévu, entre le capteur ( 1 ) et le dispositif ( 3 ) d'exploitation, une interface ( 4 ) de transmission numérique du signal de mesure et une autre interface ( 5 ) et dans lequel, par l'autre interface ( 5 ) du dispositif ( 3 ) d'exploitation, il peut être indiqué par un signal qu'un signal de mesure présent du capteur ( 1 ) est disponible pour la transmission, **caractérisé en ce qu'**il est prévu un dispositif ( 15...18 ) pour la transmission de l'énergie nécessaire au fonctionnement du capteur ( 1 ) du dispositif ( 3 ) d'exploitation au capteur ( 1 ), **en ce que** le dispositif ( 15...18 ) de transmission de l'énergie de fonctionnement du capteur ( 1 ) est constitué en l'autre interface ( 5 ), le capteur ( 1 ) étant pourvu de moyens ( 19 ), pour modifier le courant d'alimentation? pour indiquer qu'un signal de mesure présent du capteur ( 1 ) est disponible pour la transmission, et le dispositif ( 3 ) d'exploitation est pourvu de moyens ( 20 ), pour détecter cette modification du courant d'alimentation et l'exploiter comme signal d'indication.

2. Transducteur de mesure suivant la revendication 1, **caractérisé en ce que** le dispositif ( 3 ) d'exploitation est constitué pour contrôler, en respect de valeurs limites pouvant être prescrites, le taux de répétition du signal d'indication du capteur ( 1 ) suivant lequel un signal de mesure présent du capteur ( 1 ) est disponible pour la transmission.

3. Transducteur de mesure suivant l'une des revendications 1 ou 2, **caractérisé en ce que** des états de fonctionnement du capteur ( 1 ) peuvent être transmis également par l'interface ( 4 ) pour la transmission numérique de la valeur de mesure.
